# EUROPEAN PATENT APPLICATION

(11) **EP 4 503 400 A1**
(43) Date of publication of application: **05.02.2025**
(21) Application number: 23189117.7
(22) Date of filing: 02.08.2023
(51) Int. Cl.: H02K 7/18, H02K 15/14, H02K 15/16, H02K 15/03

(54) **ASSEMBLING A ROTOR OF AN ELECTRICAL GENERATOR**

(71) Applicant: Siemens Gamesa Renewable Energy A/S, 7330 Brande (DK)
(72) Inventor: Fuerst-Sylvester, Marius, 27478 Cuxhaven (DE); Henriksen, Benjamin, 7400 Herning (DK); Schneider, Thorsten, 27432 Bremervörde (DE); Soerensen, Martin Bach, 7400 Herning (DK)
(74) Representative: SGRE-Association

(57) **Abstract**

It is described a method of assembling a substantially cylinder symmetrical rotor house (101) and a substantially circular strengthening ring (102) of an electrical permanent magnet generator, in particular of a wind turbine, the method comprising: using an assembling equipment (103) comprising a holder ring (104) and plural, in particular at least four, contact rods (105a,b,c,d) having contact surfaces (106a,b,c,d) at a respective longitudinal end being adjustable regarding their positions; contacting plural rotor house locations (107a,b,c,d) of an outer surface (108) of the rotor house (101) by the contact surfaces (106a,b,c,d); exerting a force (F) via at least one contact surface (106a,b,c,d) to the rotor house location (107a,b,c,d), in order to adjust an actual shape of the rotor house (101) in order to achieve a target shape of the rotor house (101); mounting the strengthening ring (102) to the rotor house (101) at a first axial end.

## Description

### Field of invention

The present invention relates to a method and a corresponding system of assembling a rotor house and a strengthening ring for an electrical permanent magnet generator. Further, the present invention relates to a method of assembling an electrical generator.

### Art Background

Electrical generators of power plants, in particular wind turbines, become greater and greater and assembling a rotor or in general a generator becomes more and more difficult due to the large size of the parts and also the heavy weight of the generator. The diameter of the rotor house increases with every generation of new developed wind turbines. Thereby, the shape of the rotor house is more and more prone to deviations to a target shape and the shape cannot be controlled accurately any more. The rotor house may become more and more flexible for larger sizes. Especially, while a brake disk is mounted or intended to be mounted, problems arise. The same may apply when inserting plural permanent magnets into the rotor.

Thus, conventionally guiding pins and high forces are used to connect the brake disk to the rotor house.

For magnet insertion, some spacers, i.e. plastic support structure that is inserted in a track before inserting the stator in the rotorhouse and / or the magnets may have been employed.

However, the conventional methods are either not reliable or do not lead to reproducible results.

Thus, there may be a need for a method and a corresponding system of an assembling a rotor house and a strengthening ring, in particular a brake disk, wherein mounting is simplified and it can be ensured that the assembly adheres to a better degree to a target shape or geometry. Further, there may be a need for a corresponding method of assembling a whole electrical generator, where the assembly process can be simplified and/or improved also regarding the final shape of the generator including a desired size of an air gap between the stator and the rotor.

### Summary of the Invention

This need may be met by the subject matter according to the independent claims. Advantageous embodiments of the present invention are described by the dependent claims.

According to an embodiment of the present invention, it is provided a method of assembling a substantially cylinder symmetrical rotor house and a substantially circular strengthening ring of an electrical permanent magnet generator, in particular of a wind turbine, the method comprising: using an assembling equipment comprising a holder ring and plural, in particular at least four, contact rods having contact surfaces at a respective longitudinal end being adjustable regarding their (e.g. radial) positions; contacting plural rotor house locations of an outer surface of the rotor house by the contact surfaces; exerting a force via at least one contact surface to the rotor house location, in order to adjust an actual shape of the rotor house in order to achieve a target shape of the rotor house; mounting the strengthening ring to the rotor house at a first axial end.

The permanent magnet generator may be a synchronous permanent magnet generator providing for example multiple phases, such as three phases, AC power.

The rotor house may have a substantially circular cylinder symmetrical shape. The rotor house may for example have a diameter between 5 m and 15 m. At an inner surface, the rotor house may comprise plural tracks or traces for inserting plural permanent magnets in the axial direction. The tracks may be spaced apart in the circumferential direction.

The strengthening ring may be configured as a brake disk or may be a separate auxiliary ring or enforcing or strengthening ring for ensuring a stability of the rotor house at the first axial end.

The assembling equipment may be considered as auxiliary equipment enabling to perform the assembling of the rotor house and the strengthening ring. The assembling equipment may comprise plural parts which may be mounted to each other.

The holder ring may be manufactured from a single piece or from several pieces which are then mounted together. The holder ring may be configured to essentially surround the rotor house which may be received within the holder ring. However, the holder ring may have an axial extent which is smaller than an axial extent of the rotor house. The holder ring may be configured and constructed such that it can withstand forces acting in a plane of the holder ring which plane may be in particular perpendicular to a symmetry axis of the rotor house. The assembling equipment may substantially also have a fourfold or sixfold or higher fold cylinder symmetry property.

The contact rods may be configured to protrude radially inwards from the holder ring and may be connected to the holder ring via respective guidance members which will be detailed below.

The contact surfaces may be provided at respective longitudinal ends of the contact rods which may correspond to radially inner ends of the contact rods. Thus, the contact rods protrude inwards from the holder ring and the contact surfaces may be at the respective radially inner ends of the contact rods.

The rotor house may then be placed within the holder ring and may be contacted by plural contact surfaces of plural contact rods. In particular, four contact rods and respective four contact surfaces or six contact rods and respective contact surfaces may be provided or even a higher number of contact surfaces may be provided. The contact surfaces may contact or touch the respective locations at an outer surface of the rotor house such that all contact surfaces have in fact contacted the respective locations at the outer surface of the rotor house.

By exerting a drawing or pressing force via the respective plural contact surfaces (at different circumferential positions), the shape of the rotor house (at least close to the locations of the contact surfaces) may be modified or changed or adjusted in order to achieve a target shape of the rotor house. A pressing force and/or a drawing force may be exerted via the contact surfaces. For exerting a pressing force, no particular configuration of the rotor house outer surface may be necessary.

For allowing to apply (additionally or alternatively) a drawing force, some kind of hooks may be provided at the outer surface of the rotor house.

In other embodiments, a magnet may be arranged at the contact surfaces, in order to allow to connect the contact surfaces with the respective outer surface locations of the rotor house via a magnetic force also enabling to exert a drawing force (in the radial outward direction by using the contact surfaces of the contact rods). E.g. If the head of the rod or the material forming the contact surface would be magnetic or rotor house design changed, it would be possible to pull at the respective location of the rotor house.

Not the entire shape of the rotor house may be adjustable by the method, but at least a shape of the rotor house at the first axial end and the region around the first axial end. In particular, at least the shape of a mounting portion or mounting surface or region of the rotor house may be adjusted by the method, at which mounting surface or mounting region the strengthening ring is to be mounted.

The strengthening ring may have a geometry or shape which may not be adjustable or changeable any more. Thereby, the target shape may be derived from the actual shape of the strengthening ring. When the shape of the rotor house is adjusted to achieve the target shape, mounting the strengthening ring may be enabled.

According to an embodiment of the present invention, a pressing and/or a drawing force of at least one contact surface is exerted in dependence of the actual shape and/or the target shape of the rotor house.

The target shape may be substantially a circular target shape of an end face or end surface at the first axial end of the rotor house. The actual shape may, however, deviate from the circular shape, such as when the actual shape is for example an oval shape. By applying a pressing force those regions which protrude (from a circular geometry) and/or exerting a drawing force to those regions which are bulged in or deformed inwards (from the ideal circular geometry), the target shape, in particular circular shape, may be achieved for the rotor house at least at or close to the first axial end. When a pressing force and also drawing force is exertable or actually exerted, the adjustment of the shape may even be improved and accelerated. In particular, the accuracy of the shape achieved by the adjustments or exerting the force may be complied with to a higher accuracy to the target shape.

According to an embodiment of the present invention, the plural rotor house locations contacted by the contact surfaces of the contact rods are at plural different circumferential positions, in particular evenly covering a whole circumference, of the outer surface of the rotor house, and are in particular at substantially same axial positions.

For example, four or six or eight or ten or even more contact rods having respective contact surfaces may be provided, spaced apart by an angle (in the circumferential direction) which is obtained by dividing 360° by the number of rods. The contact rods may be in the same axial positions or may also in other embodiments be at different axial positions. Thereby, the desired target shape may be achieved in an accurate manner.

According to an embodiment of the present invention, the plural rotor house locations are axially closer to the first axial end than to a second axial end of the rotor house, and/or wherein at the second axial end of the rotor house a rotor bearing is mounted providing strengthening, wherein the rotor bearing is in particular mounted with an inner stator having stator windings, the rotor bearing supporting the rotor rotatably relative to the stator.

At the second axial end, the shape of the rotor house may substantially not be changeable any more when compared to the possibility to change the shape close to or at the first axial end. This may be due to at least another component being mounted at the second axial end, in particular being the rotor bearing. The mounted rotor bearing may provide stability of the rotor house at the second axial end.

At the first axial end, the rotor house may, when the assembling method is initiated, be free of any strengthening ring. It should be noted that the method may be performed when already the rotor house is coupled via the rotor bearing with an inner stator. However, when initiating or starting the assembly method, plural permanent magnets may or not be inserted into inner mounting locations of the rotor house.

According to an embodiment of the present invention, radial positions of the contact surfaces are adjustable, in particular by radially moving the contact rods, thereby exerting a pressing and/or drawing force to the respective rotor house location in the radial direction inwards and/or outwards, in order to deform the rotor house towards the target shape.

The rods or at least the contact surfaces at the longitudinal ends of the rods may be adjustable regarding their position, at least radial position. In order to adjust their (radial) positions, however, a force is needed to be applied (radially inwards or outwards) due to the contact surface contacting respective locations of the rotor house outer surface which provide counter-forces which need to be overcome. A target shape and/or the actual shape may define a required change in the radial positions of the plural contact surfaces. However, in order to reach those plural target positions of the contact surfaces, respective forces are needed to be exerted.

According to an embodiment of the present invention, the assembling equipment comprises for each contact rod a guidance member mounted to the holder ring, wherein the contact rods are guided along a radial direction in the respective guidance members using at least one of: a hydraulic system; a pneumatic system; internal screw threads in the guidance member, the contact rods each having an external thread.

The guidance members may ensure that the contact rods are guided substantially along the (respective) radial direction inwards or outwards. The guidance member may for example completely surround the respective entire contact rod or at least a portion of the contact rod. For example, lubrication may be applied between an outer surface of the respective contact rod and an inner surface of the guidance member. The contact rods may for example have a cylindrical shape having for example a circular cross-section. The guidance member may comprise an elongated hole or through-hole through which the contact rods may slide or along which the contact rods may slide. The movement of the contact rods may be achieved by operating a hydraulic or pneumatic system which may at least allow to exert a particular pressing force. In other embodiments, the guidance member may comprise an internal screw thread into which external thread of the contact rod is engaged. A drawing or pressing force may be exerted by turning or rotating the contact rods relative to the internal screw threads in the guidance member.

According to an embodiment of the present invention, the method further comprises performing, in particular optical, measurements of the shape of the rotor house and/or the shape of the strengthening ring (which may be configured as brake disk) before and/or during the assembling method, to generate measurement results, wherein the measurement results are provided in particular by an optical measurement device, in particular LIDAR or Laser tracker, or using another method.

E.g. the following procedure may be carried out:
- Measurement of the shape of strengthening ring resulting in the target shape for the rotor house
- manipulating / deforming / adjusting the rotor house until it meets the shape of strengthening ring
- mounting the strengthening ring to the adjusted rotor house

The measurement results may advantageously be utilized for controlling the assembly equipment, in particular controlling the force and/or positions exerted via or of the contact surfaces. The LIDAR device may enable to measure distances from a centre of the LIDAR device, in particular a reflection mirror, to plural locations of an object to be measured. From the plural distances, the shape of the object under investigation may be derivable. Thereby, the method may ensure that the target shape is achieved or at least approximately achieved.

According to an embodiment of the present invention, for measuring the shape of the rotor house, plural (e.g. relative) positions at a front edge surface at the first axial end of the rotor house are measured, and/or wherein for measuring the shape of the strengthening ring, plural (e.g. relative) positions at a circumferential outer edge surface of the strengthening ring are measured.

At the front edge surface or close to this front edge surface, the strengthening ring may be mountable and also mounted during the method. The circumferential outer edge surface of the strengthening ring may then in the assembled state, contact at least portions of the front edge surface of the rotor house at the first axial end.

According to an embodiment of the present invention, the actual shape of the rotor house is based on measurement results of the shape of the rotor house, and/or wherein the target shape of the rotor housed is derived from measuring results regarding a shape of the strengthening ring.

The measurement results may be provided by the optical measurement equipment, e.g. the LIDAR or the Laser tracker. Thereby, the shape of the rotor house and/or the strengthening ring may be derived or obtained in a reliable accurate manner.

According to an embodiment of the present invention, the exerting the force via at least one contact surface to the rotor house and performing measurements is performed iteratively, until the actual shape of the rotor house deviates less than a predefined amount from the target shape.

For example, the actual shape of the rotor house may be measured and compared to the target shape. Depending on the comparison or based on the comparison results, the contact surfaces may be moved or may be controlled to exert respective forces in order to diminish any deviation between the actual shape and the target shape. After the application or exertion of the force, the shape measurement may be repeated and the forces may be applied accordingly depending on the next measurement results or a deviation between the next actual shape and the target shape. Thereby, the actual shape may correspond better and better to the desired target shape. The process may be interrupted or terminated, when the deviation between the actual shape and the target shape is still acceptable in respective margins such that mounting the strengthening ring at the first axial end of the rotor house is possible.

According to an embodiment of the present invention, the holder ring has adjustable size, and/or wherein the holder ring is made from flat steel, in particular as one single piece or several pieces mounted together, and/or wherein the holder ring comprises a plate shape or disk ring shape, having main surface in a plane perpendicular to a cylinder axis of the rotor house, and/or the strengthening ring has circular disk ring shape, in particular configured as a brake disk.

Thereby, great flexibility is provided and conventional generators may be supported.

According to an embodiment of the present invention, the method comprises, before mounting the strengthening ring to the rotor house: inserting, in particular for plural circumferential positions, plural magnets at inner surface of rotor house along the axial direction.

It is noted that during inserting the magnets, the stator may already be assembled with the rotor house. The inserting the magnets may be performed before adjusting the shape of the rotor house or after adjusting the shape of the rotor house or during adjusting the shape of the rotor house.

It has been observed that when one or more magnets are inserted or mounted at the rotor house, the shape of the rotor house may have changed (possibly due to magnetic pull forces). Thus, monitoring the shape of the rotor house during mounting the magnets may enable to counteract any undesired shape changes by exerting force(s) at the respective location(s) of the rotor house, in order to reestablish the target shape.

Further, after having inserted all the plural magnets, the method may be continued including measuring the shape of the rotor house and/or adjusting the shape of the rotor house, then mounting the strengthening ring.

According to an embodiment of the present invention, mounting the strengthening ring to the rotor house includes: mounting the strengthening ring to the first axial end of the rotor house, in particular at the front edge of the first axial end of the rotor house, in particular using plural bolts.

When the strengthening ring is mounted at the first axial end of the rotor house, the shape of the rotor house at this end may also be strengthened and may at least not be as flexible any more as it was before mounting the strengthening ring.

According to an embodiment of the present invention it is provided a method of assembling an electrical permanent magnet generator, in particular of a wind turbine, comprising: mounting a rotor bearing at the second axial end of a rotor house; then mounting an inner stator at the rotor bearing, the rotor bearing supporting the rotor rotatably relative to the stator; then performing a method according to one of the preceding embodiments.

It should be understood, that features, individually or in any combination, disclosed, described, explained or provided for a method of assembling a rotor house and a strengthening ring may also, individually or in any combination, apply to a system for assembling a rotor house and a strengthening ring according to embodiments of the present invention and vice versa.

According to an embodiment of the present invention it is provided a system for assembling a substantially cylinder symmetrical rotor house and a substantially circular strengthening ring of an electrical permanent magnet generator, in particular of a wind turbine, the system comprising: an assembling equipment comprising a holder ring and plural, in particular at least four, contact rods having contact surfaces at a respective longitudinal end being adjustable regarding their (e.g. radial) positions; wherein the contact surfaces are configured to contact plural rotor house locations of an outer surface of the rotor house and to exert a force to the rotor house location, in order to adjust an actual shape of the rotor house in order to achieve a target shape of the rotor house; in particular optical measurement equipment for measuring at least the actual shape of the rotor house; a controller adapted to control the force exerted via and/or the position of the contact surfaces, in particular based on the actual shape and/or a target shape of the rotor house.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a method step of a method of assembling a rotor house and a strengthening ring according to an embodiment of the present invention utilizing a system for assembling a rotor house and the strengthening ring according to an embodiment of the present invention;
Fig. 2 schematically illustrates a method step of a method of assembling a rotor house and a strengthening ring according to an embodiment of the present invention utilizing a system for assembling a rotor house and the strengthening ring according to an embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

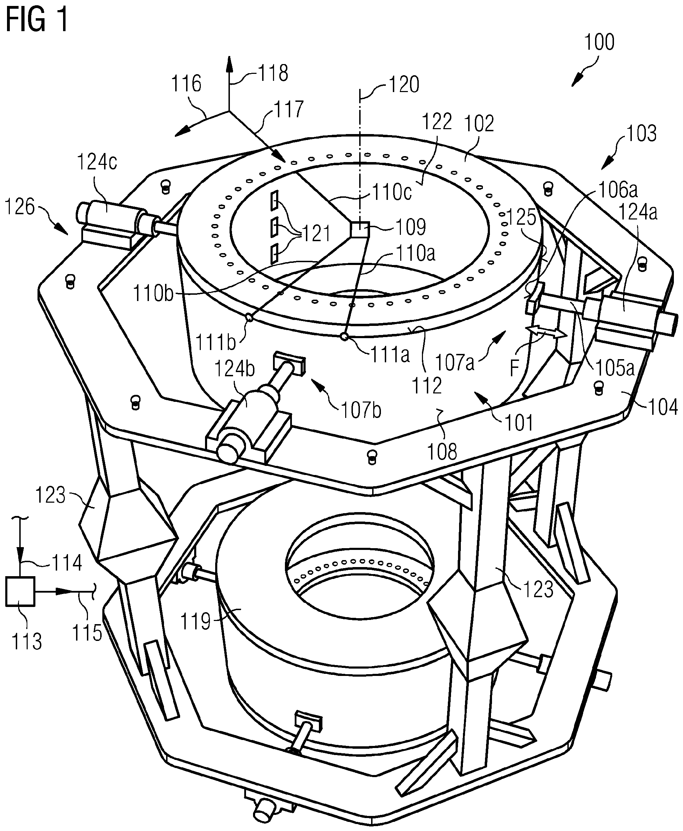

The system 100 for assembling a rotor house 101 and a strengthening ring 102 of an electrical permanent magnet generator 126 illustrated in **Fig. 1** includes an assembling equipment 103 comprising a holder ring 104 and plural contact rods 105a,b,c having contact surfaces 106a,b,c at respective longitudinal ends (in particular radial inner ends) being adjustable regarding their (radial) positions. The contact surfaces 106a,b,c,d are configured to contact plural rotor house locations 107a,b,c,d of an outer surface 108 of the rotor house 101 and exert a force F to the rotor house location 107a,b,c,d, in order to adjust an actual shape of the rotor house 101 in order to achieve a target shape of the rotor house 101.

The assembling equipment 103 comprises for each contact rod 105a,b,c,d a guidance member 124a,b,c,d mounted to the holder ring 104, wherein the contact rods are guided along a radial direction 117 in the respective guidance members 124a,b,c,d.

The embodiment 100 of the system further includes optical measurement equipment 109 configured for measuring at least the actual shape of the rotor house 101. The optical measurement equipment is configured as a LIDAR system enabling to measure, from the centre of the measurement equipment 109, plural distances 110a, 110b, 110c, ... to plural locations 111a,b,c, ... at an edge or front edge surface 112 at the first axial side (the upper side in Fig. 1) of the rotor house 101.

The embodiment 100 illustrated in Fig. 1 further comprises a controller 113 which is adapted to control the force F and/or the position of the contact surfaces 106a,b,c,d at the end of the contact rods 105a,b,c,d in particular based on the actual shape and/or a target shape of the rotor house 101. Thereby, the controller 113 receives measurement values 114 from the optical measurement equipment 109 and supplies control signals 115 to a not illustrated hydraulic system which is configured to move the plural rods 105a,b,c,d .......... to defined positions and/or exert a defined force to the plural locations 107a,b,c,d via the contact surfaces 106a,b,c towards the rotor house outer surface 108 at the plural locations 107a,b,c,d.

The system 100 is configured to carry out a method of assembling the rotor house 101 and the strengthening ring 102 according to an embodiment of the present invention. During the method, plural rotor house locations 107a,b,c,d of the outer surface 108 of the rotor house 101 are contacted by the contact surfaces 106a,b,c,d and a force F is exerted via at least one contact surface 106a to the rotor house location 107a, in order to adjust an actual shape of the rotor house 101 in order to achieve a target shape of the rotor house 101.

In a further method step, the strengthening ring 102 is mounted to the rotor house at the first axial end.

The changing the position of the contact surfaces 106a,b,c,d and/or the applied force F may be exerted in dependence of the actual shape and/or the target shape of the rotor house 101. As can be appreciated from Fig. 1, the plural rotor house locations 107a,b,c,d are arranged at plural different circumferential positions (the circumferential direction is indicated with reference sign 116, the radial direction is indicated with reference sign 117 and the axial direction is indicated with reference sign 118 in Fig. 1).

Further, these plural rotor house locations 107a,b,c,d are at substantially same axial positions (along the axial direction 118). In the embodiment illustrated in Fig. 1, four contact rods are spaced apart in the circumferential direction 116 by 90°. The plural rotor house locations 107a,b,c,d are axially closer to the first axial end (upper side in Fig. 1) than to the second axial end (lower side of the rotor house 101 in Fig. 1) of the rotor house 101.

Fig. 1 includes an illustration a mirror image provided by a virtual mirror at the ground level. As can be seen in the mirror image (showing the components from below), a rotor bearing 119 is mounted at the second axial end of the rotor house 101. The rotor bearing 119 may further be connected with a stator (not illustrated in Fig. 1) when starting or when performing the assembly method. The rods 105a,b,c,d may be movable using a hydraulic system which is not illustrated in Fig. 1.

The optical measurement equipment 109 is configured to perform measurements of the shape of the rotor house 101 and/or the strengthening ring 102. The measurement results may be utilized to determine the shape of the rotor house 101 and/or the strengthening ring 102. Therefore, the shape of the rotor house is defined or determined by determining plural relative positions 111a,b,c at the front edge surface 112 at the first axial end of the rotor house 101.

The holder ring 104 may be manufactured from a single piece or from plural pieces which are mounted to each other and the holder ring may be adjustable in size, for example by inserting one or more spacer elements. In the embodiment illustrated in Fig. 1, the holder ring 104 is made of flat steel providing especially rigidity in the plane of the holder ring 104 which is substantially the horizontal plane in Fig. 1. Perpendicular to the horizontal plane, is the rotation axis 120 of the rotor house 101 which is coincident with the axial direction 118.

Before mounting the stiffening ring 102 to the rotor house 101, the assembly method may comprise to insert plural permanent magnets 121 at the inner surface 122 of the rotor house 101 along the axial direction. The strengthening ring 102 (in particular via an outer edge 125) may then, after inserting the magnets, be mounted at the front edge 112 of the rotor house 101, in particular using plural bolts. In particular, a step edge 112 may be provided or a cone-shaped edge may be provided for allowing a fit between the strengthening ring 102 and the first axial side of the rotor house 101.

During a method of assembling an electrical permanent magnet generator, a rotor bearing 119 may first be mounted at the second axial end of the rotor house 101. Then, an inner stator (not illustrated in Fig. 1) may be mounted at the rotor bearing 119. As a next step, the method of assembling the rotor house and the strengthening ring may be performed as explained in detail above.

In the embodiment illustrated in Fig. 1, the assembling equipment 101 comprising the holder ring 104 comprises standing or supporting members (legs) or base members 123 which on a lower end are situated on a ground floor and an upper end carry the holder ring 104.

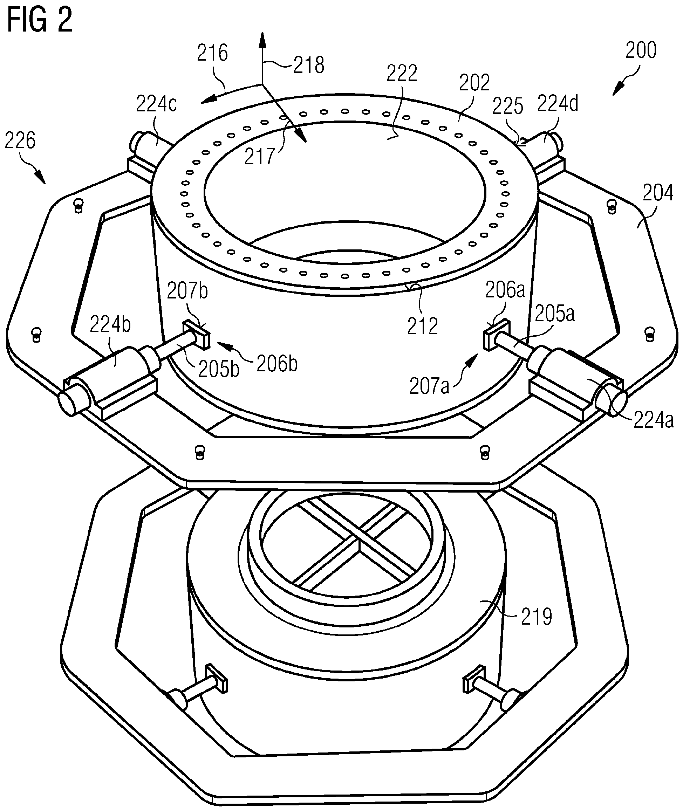

In the embodiment 200 of the system illustrated in Fig. 2, those standing members 123 are missing and the holder ring may be fixed by other means, for example from above or from the side.

It should be noted that elements or structures similar in structure and/or function in the Figs. 1 and 2 are labelled with reference signs differing only in the first digit. A description of one element not described in detail with respect to one particular embodiment or figure may be taken from the description of this corresponding element with respect to another embodiment or figure.

The holder ring may also be referred to as a support ring (size adjustable). The support ring and several hydraulic units may control the shape of the open end of the rotor house. A measurement device, such as measurement device 109 illustrated in Fig. 1, is measuring the brake disk (for example of a stiffening ring 102) which may define a target shape of the rotor house before the assembly starts. While the magnets are inserted and the brake disk is mounted, the shape of the rotor house may be measured continuously. Due to the measurement of the brake disk or in general stiffening ring (in particular defining a target shape of the rotor house) and due to the live measurement with the insertion of the magnets, the rotor house shape may be controlled during the complete insertion and mounting process. Thereby, a faster insertion of magnets and the mounting process may be accelerated so that a high accuracy of a design shape can be achieved in order to achieve a minimal air gap between the rotor and the stator.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of assembling a substantially cylinder symmetrical rotor house (101) and a substantially circular strengthening ring (102) of an electrical permanent magnet generator, in particular of a wind turbine, the method comprising:
using an assembling equipment (103) comprising a holder ring (104) and plural, in particular at least four, contact rods (105a,b,c,d) having contact surfaces (106a,b,c,d) at a respective longitudinal end being adjustable regarding their positions;
contacting plural rotor house locations (107a,b,c,d) of an outer surface (108) of the rotor house (101) by the contact surfaces (106a,b,c,d);
exerting a force (F) via at least one contact surface (106a,b,c,d) to the rotor house location (107a,b,c,d), in order to adjust an actual shape of the rotor house (101) in order to achieve a target shape of the rotor house (101);
mounting the strengthening ring (102) to the rotor house (101) at a first axial end.

2. Method according to the preceding claim, wherein a pressing and/or a drawing force (F) of at least one contact surface (106a,b,c,d) is exerted in dependence of the actual shape and/or the target shape of the rotor house (101).

3. Method according to any one of the preceding claims, wherein the plural rotor house locations (107a,b,c,d) contacted by the contact surfaces (106a,b,c,d) of the contact rods are at plural different circumferential positions, in particular evenly covering a whole circumference, of the outer surface of the rotor house (101), and are in particular at substantially same axial positions.

4. Method according to any one of the preceding claims,
wherein the plural rotor house locations (107a,b,c,d) are axially closer to the first axial end than to a second axial end of the rotor house (101), and/or
wherein at the second axial end of the rotor house a rotor bearing (119) is mounted providing strengthening,
wherein the rotor bearing (119) is in particular mounted with an inner stator having stator windings, the rotor bearing supporting the rotor rotatably relative to the stator.

5. Method according to any one of the preceding claims,
wherein radial positions of the contact surfaces (106a,b,c,d) are adjustable, in particular by radially moving the contact rods, thereby exerting a pressing and/or drawing force to the respective rotor house location (107a,b,c,d) in the radial direction inwards and/or outwards, in order to deform the rotor house towards the target shape.

6. Method according to any one of the preceding claims,
wherein the assembling equipment (103) comprises for each contact rod (105a,b,c,d) a guidance member (124a,b,c,d) mounted to the holder ring,
wherein the contact rods are guided along a radial direction in the respective guidance members using at least one of:
a hydraulic system;
a pneumatic system;
internal screw threads in the guidance member, the contact rods each having an external thread.

7. Method according to any one of the preceding claims, further comprising:
performing, in particular optical, measurements of the shape of the rotor house (101) and/or the shape of the strengthening ring (102) before and/or during the assembling method, to generate measurement results,
wherein the measurement results are provided in particular by an optical measurement device (109), in particular LIDAR or Laser tracker.

8. Method according to any one of the preceding claims, wherein for measuring the shape of the rotor house, plural (relative) positions (111a,b,c) at a front edge surface (112) at the first axial end of the rotor house (101) are measured, and/or
wherein for measuring the shape of the strengthening ring, plural (relative) positions at a circumferential outer edge surface (125) of the strengthening ring (102) are measured.

9. Method according to any one of the preceding claims,
wherein the actual shape of the rotor house is based on measurement results of the shape of the rotor house (101), and/or
wherein the target shape of the rotor housed is derived from measuring results regarding a shape of the strengthening ring (102).

10. Method according to any one of the preceding claims,
wherein the exerting the force (F) via at least one contact surface (106a,b,c,d) to the rotor house and performing measurements is performed iteratively, until the actual shape of the rotor house deviates less than a predefined amount from the target shape.

11. Method according to any one of the preceding claims,
wherein the holder ring (104) has adjustable size, and/or
wherein the holder ring (104) is made from flat steel, in particular as one single piece or several pieces mounted together, and/or
wherein the holder ring (104) comprises a plate shape or disk ring shape, having main surface in a plane perpendicular to a cylinder axis of the rotor house, and/or
the strengthening ring (102) has circular disk ring shape, in particular configured as a break disk.

12. Method according to any one of the preceding claims, the method comprising, before mounting the strengthening ring (102) to the rotor house (101):
inserting, in particular for plural circumferential positions, plural magnets (121) at inner surface (122) of rotor house (101) along the axial direction (118).

13. Method according to any one of the preceding claims, wherein mounting the strengthening ring to the rotor house includes:
mounting the strengthening ring (102) to the first axial end of the rotor house, in particular at the front edge (112) of the first axial end of the rotor house (101), in particular using plural bolts.

14. Method of assembling an electrical permanent magnet generator (126), in particular of a wind turbine, comprising:
mounting a rotor bearing (119) at the second axial end of a rotor house (101); then
mounting an inner stator at the rotor bearing (119), the rotor bearing supporting the rotor rotatably relative to the stator; then
performing a method according to one of the preceding claims.

15. System (100) for assembling a substantially cylinder symmetrical rotor house (101) and a substantially circular strengthening ring (102) of an electrical permanent magnet generator, in particular of a wind turbine, the system comprising:
an assembling equipment (103) comprising a holder ring (104) and plural, in particular at least four, contact rods (105a,b,c,d) having contact surfaces (106a,b,c,d) at a respective longitudinal end being adjustable regarding their positions;
wherein the contact surfaces (1076a,b,c,d) are configured to contact plural rotor house locations (107a,b,c,d) of an outer surface (108) of the rotor house (101) and to exert a force (F) to the rotor house location (107a,b,c,d), in order to adjust an actual shape of the rotor house in order to achieve a target shape of the rotor house;
in particular optical measurement equipment (109) for measuring at least the actual shape of the rotor house (101);
a controller (113) adapted to control the force (F) exerted via and/or the position of the contact surfaces (106a,b,c,d), in particular based on the actual shape and/or a target shape of the rotor house (101).
